# EUROPEAN PATENT APPLICATION

(11) **EP 4 789 888 A2**
(43) Date of publication of application: **12.08.2026**
(21) Application number: 25223671.6
(22) Date of filing: 16.12.2025
(51) Int. Cl.: B60K 1/04, H01M 50/14, H01M 50/242, H01M 50/249

(54) **VEHICLE MOUNTING STRUCTURE FOR ENERGY STORAGE APPARATUS**

(30) Priority: 05.02.2025 JP 2025017907
(71) Applicant: Toyota Jidosha Kabushiki Kaisha, Toyota-shi, Aichi-ken 471-8571 (JP)
(72) Inventor: INOUE, Shigeyuki, Toyota-shi, 471-8571 (JP); SUGIE, Kazuki, Toyota-shi, 471-8571 (JP); KUMAZAWA, Kazuya, Toyota-shi, 471-8571 (JP)
(74) Representative: TBK

(57) **Abstract**

A vehicle mounting structure for an energy storage apparatus including: an energy storage cell (32) in which a vertical wall (56) extending in a vehicle up and down direction is disposed on an end portion thereof in a first direction orthogonal to the vehicle up and down direction; an upper cover (34) disposed above the energy storage cell (32); a panel member (44, 46) disposed above the upper cover (34); and an elastic member (42) that is disposed between the upper cover (34) and the panel member (44, 46) and is disposed overlapping the vertical wall (56) as viewed from the vehicle up and down direction.

## Description

### BACKGROUND

### Technical Field

This disclosure relates to a vehicle mounting structure for an energy storage apparatus.

### Related Art

Japanese Patent Application Laid-open (JP-A) No. 2023-46945 discloses an energy storage apparatus in which a plurality of battery modules are housed. Furthermore, in the energy storage apparatus disclosed in JP-A No. 2023-46945, an upper case that covers the plural battery modules and intermediate mounts that support the upper case are disclosed, and elastic members sandwiched between the upper case and a body are disposed on upper surfaces of the intermediate mounts.

However, in the energy storage apparatus disclosed in JP-A No. 2023-46945, the intermediate mounts are disposed in gaps between adjacent battery modules, so the input of loads into energy storage cells due to loads input from outside is inhibited. At the same time, since the intermediate mounts are disposed in gaps between adjacent battery modules, there is the potential for space efficiency inside the energy storage apparatus to end up being degraded.

### SUMMARY

In view of the above circumstances, it is an object of this disclosure to obtain a vehicle mounting structure for an energy storage apparatus that can inhibit a degradation in space efficiency in the energy storage apparatus and inhibit the input of loads into energy storage cells due to loads input from outside.

A vehicle mounting structure for an energy storage apparatus pertaining to a first aspect includes: an energy storage cell in which a vertical wall is disposed on an end portion thereof in a first direction orthogonal to a vehicle up and down direction; an upper cover disposed above the energy storage cell; a panel member disposed above the upper cover; and an elastic member that is disposed between the upper cover and the panel member and is disposed overlapping the vertical wall as viewed from the vehicle up and down direction.

According to the vehicle mounting structure for an energy storage apparatus pertaining to the first aspect, the vehicle mounting structure includes the elastic member that is disposed between the upper cover and the panel member and is disposed overlapping the vertical wall as viewed from the vehicle up and down direction. Because of this, when loads are input to the energy storage apparatus from outside, the loads are transferred in the vehicle up and down direction using the vertical wall that has a relatively high rigidity in the energy storage cell as a path for transferring the loads. For this reason, compared with a case where load transfer members are separately disposed inside the energy storage apparatus, a degradation in space efficiency in the energy storage apparatus can be inhibited and, for example, when loads in the vehicle up and down direction are input to the energy storage apparatus, the loads can be inhibited from being input into the energy storage cell.

A vehicle mounting structure for an energy storage apparatus pertaining to a second aspect is the first aspect, wherein the elastic member is in contact with both the upper cover and the panel member.

According to the vehicle mounting structure for an energy storage apparatus pertaining to the second aspect, the elastic member is in contact with both the upper cover and the panel member. Because of this, compared with a case where the elastic member is disposed away from one of the upper cover and the panel member, when loads are input to the energy storage apparatus from outside, irrespective of the deformation mode of the upper cover and the panel member the loads are transferred via the place where the elastic member is disposed, that is, the vertical wall that has a relatively high rigidity in the energy storage cell, just after the loads are input to the energy storage apparatus. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a third aspect is any one of the first aspect or the second aspect, wherein the energy storage cell includes a terminal wall that is disposed on the end portion in the first direction and in which an electrode terminal is disposed and a side wall that is connected to the terminal wall and is parallel to the vehicle up and down direction, and the terminal wall is thicker than the side wall.

According to the vehicle mounting structure for the energy storage apparatus pertaining to the third aspect, the terminal wall that is disposed on the end portion in the first direction and in which the electrode terminal is disposed is thicker than the side wall that is connected to the terminal wall and extends in the vehicle up and down direction. Because of this, when loads are input to the energy storage apparatus from outside, the loads are transferred using as a load transfer path the terminal wall that is connected to the side wall and whose rigidity is further improved by being configured thicker than the side wall in the energy storage cell. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a fourth aspect is the third aspect, wherein the elastic member is disposed overlapping both the terminal wall and the side wall as viewed from the vehicle up and down direction.

According to the vehicle mounting structure for an energy storage apparatus pertaining to the fourth aspect, the elastic member is disposed overlapping both the terminal wall and the side wall as viewed from the vehicle up and down direction. Because of this, loads are transferred using as a load transfer path both the terminal wall that has a relatively high rigidity in the energy storage cell and the side wall that is connected to the terminal wall and extends in the vehicle up and down direction. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a fifth aspect is any one of the third aspect or the fourth aspect, wherein the energy storage cell houses an electrode body and includes a spaced-apart region by which the terminal wall and the electrode body are spaced apart from each other in the first direction inside the energy storage cell, and the elastic member is disposed overlapping the spaced-apart region as viewed from the vehicle up and down direction.

According to the vehicle mounting structure for an energy storage apparatus pertaining to the fifth aspect, the elastic member is disposed overlapping the spaced-apart region by which the terminal wall and the electrode body are spaced apart from each other in the first direction as viewed from the vehicle up and down direction. Because of this, loads are transferred at the spaced-apart region by which the terminal wall and the electrode body are spaced apart from each other in the energy storage cell, that is, the part where the electrode body is relatively not disposed. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a sixth aspect is any one of the first aspect to the fifth aspect, further including a lower cover disposed below the energy storage cell and a reinforcement joined to the lower cover, wherein the elastic member is disposed overlapping the reinforcement as viewed from the vehicle up and down direction.

According to the vehicle mounting structure for an energy storage apparatus pertaining to the sixth aspect, the elastic member is disposed overlapping the reinforcement as viewed from the vehicle up and down direction. Because of this, when loads are input to the energy storage apparatus from outside, the loads are transferred using as a load transfer path both the terminal wall that has a relatively high rigidity in the energy storage cell and the reinforcement that has a relatively high rigidity in the energy storage apparatus. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a seventh aspect is any one of the third aspect to the sixth aspect, wherein the energy storage cell includes a pair of the terminal walls that are disposed on each of both end portions in the first direction, and a plurality of the elastic members are disposed overlapping each of the pair of terminal walls as viewed from the vehicle up and down direction.

According to the vehicle mounting structure for an energy storage apparatus pertaining to the seventh aspect, the plurality of elastic members are disposed overlapping each of the pair of terminal walls disposed on both end portions of the energy storage cell in the first direction as viewed from the vehicle up and down direction. Because of this, the rigidity of the energy storage cell itself is improved as a result of being provided with a plurality of the terminal walls that have a relatively high rigidity in the energy storage cell, and when loads are input to the energy storage apparatus from outside, the loads are transferred in the vehicle up and down direction at multiple places that have a relatively high rigidity in the energy storage cell, that is, at each of the pair of terminal walls. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to an eighth aspect is the seventh aspect, further including a cooler disposed between the upper cover and the panel member, wherein the cooler is disposed between the plurality of elastic members and is disposed overlapping the energy storage cell as viewed from the vehicle up and down direction.

According to the vehicle mounting structure for an energy storage apparatus pertaining to the eighth aspect, the cooler is disposed between the plurality of elastic members and is disposed overlapping the energy storage cell as viewed from the vehicle up and down direction. Because of this, when loads are input to the energy storage apparatus from outside, the loads are transferred to the energy storage cell not directly but via the cooler in the space between the pair of terminal walls that has a relatively low rigidity in the energy storage cell. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a ninth aspect is any one of the third aspect to the sixth aspect, wherein the energy storage cell includes a bottom wall that is connected to the terminal wall and is orthogonal to the vehicle up and down direction, the terminal wall includes a first part and a second part that is disposed more outward of the energy storage cell in the first direction than the first part, and the first part is spaced apart from the bottom wall in the vehicle up and down direction.

According to the vehicle mounting structure for an energy storage apparatus pertaining to the ninth aspect, the terminal wall includes the first part that is spaced apart from the bottom wall in the vehicle up and down direction. Because of this, when loads are input to the energy storage apparatus from outside, the bottom wall is displaced in the vehicle up and down direction in the space between the terminal wall and the bottom wall to absorb the input loads, and the loads are transferred to the terminal wall that has a relatively high rigidity in the energy storage cell. For this reason, a degradation in space efficiency in the energy storage apparatus can be inhibited and, for example, when loads in the vehicle up and down direction are input to the energy storage apparatus, the loads can be further inhibited from being input into the energy storage cell.

A vehicle mounting structure for an energy storage apparatus pertaining to a tenth aspect is any one of the third aspect to the sixth aspect, further including a pair of securing walls that are disposed on both ends in a second direction, which is orthogonal to both the vehicle up and down direction and the first direction, of a plurality of the energy storage cells disposed next to each other in the second direction and secure the energy storage cells and a connecting wall that is disposed extending in the second direction and is connected to the pair of securing walls, wherein the elastic member is disposed overlapping both the connecting wall and the terminal wall as viewed from the vehicle up and down direction.

According to the vehicle mounting structure for an energy storage apparatus pertaining to the tenth aspect, the elastic member is disposed overlapping both the connecting wall and the terminal wall as viewed from the vehicle up and down direction. Because of this, when loads are input to the energy storage apparatus from outside, the loads are input to the connecting wall connected to the securing walls that secure the energy storage cells, and thereafter the loads are transferred to the terminal wall that has a relatively high rigidity in the energy storage cell. For this reason, a degradation in space efficiency in the energy storage apparatus can be inhibited and, for example, when loads in the vehicle up and down direction are input to the energy storage apparatus, the loads can be further inhibited from being input into the energy storage cells.

A vehicle mounting structure for an energy storage apparatus pertaining to an eleventh aspect is the tenth aspect, wherein the connecting wall is joined to the energy storage cells in a position overlapping the elastic member as viewed from the vehicle up and down direction.

According to the vehicle mounting structure for an energy storage apparatus pertaining to the eleventh aspect, the connecting wall is joined to the energy storage cells in a position overlapping the elastic member as viewed from the vehicle up and down direction. Because of this, when loads are input to the energy storage apparatus from outside, a load transfer path is more reliably formed in a place where loads between the connecting wall and the energy storage cells are intended to be transferred. For this reason, a degradation in space efficiency in the energy storage apparatus can be inhibited and, for example, when loads in the vehicle up and down direction are input to the energy storage apparatus, the loads can be further inhibited from being input into the energy storage cells.

A vehicle mounting structure for an energy storage apparatus pertaining to a twelfth aspect is the eleventh aspect, wherein the connecting wall is joined to the upper cover in a position overlapping the elastic member as viewed from the vehicle up and down direction.

According to the vehicle mounting structure for an energy storage apparatus pertaining to the twelfth aspect, the connecting wall is joined to the upper cover in a position overlapping the elastic member as viewed from the vehicle up and down direction. Because of this, when loads are input to the energy storage apparatus from outside, a load transfer path is more reliably formed in a place where loads between the upper cover, the connecting wall, and the energy storage cell are intended to be transferred. For this reason, a degradation in space efficiency in the energy storage apparatus can be inhibited and, for example, when loads in the vehicle up and down direction are input to the energy storage apparatus, the loads can be further inhibited from being input into the energy storage cells.

A vehicle mounting structure for an energy storage apparatus pertaining to a thirteenth aspect is the vehicle mounting structure for an energy storage apparatus of any one of the first aspect to the twelfth aspect, wherein the vehicle mounting structure includes a pair of frame members extending in a vehicle front and rear direction and a crossmember that extends in a vehicle width direction, is connected to the pair of frame members, and is disposed away from the panel member in a vehicle rearward direction as viewed from the vehicle up and down direction.

According to the vehicle mounting structure for an energy storage apparatus pertaining to the thirteenth aspect, the vehicle mounting structure includes the crossmember that is disposed away from the panel member in the vehicle rearward direction as viewed from the vehicle up and down direction. Because of this, when loads are input to the energy storage apparatus from outside, the loads from outside are transferred to the crossmember at the place where the crossmember is disposed and at the terminal wall, which has a relatively high rigidity in the energy storage cell, the elastic member, and the panel member at a place on the vehicle forward side of the crossmember. For this reason, the required amount of the panel member can be reduced, a degradation in space efficiency in the energy storage apparatus can be inhibited, and, for example, when loads in the vehicle up and down direction are input to the energy storage apparatus, the loads can be inhibited from being input into the energy storage cell.

A vehicle mounting structure for an energy storage apparatus pertaining to a fourteenth aspect is the vehicle mounting structure for an energy storage apparatus of any one of the first aspect to the twelfth aspect, wherein the vehicle mounting structure includes a pair of frame members extending in a vehicle front and rear direction and a crossmember that extends in a vehicle width direction, is connected to the pair of frame members, and is disposed away from the panel member in a vehicle forward direction as viewed from the vehicle up and down direction.

According to the vehicle mounting structure for an energy storage apparatus pertaining to the fourteenth aspect, the vehicle mounting structure includes the crossmember that is disposed away from the panel member in the vehicle forward direction as viewed from the vehicle up and down direction. Because of this, when loads are input to the energy storage apparatus from outside, the loads from outside are transferred to the crossmember at the place where the crossmember is disposed and at the terminal wall, which has a relatively high rigidity in the energy storage cell, the elastic member, and the panel member at a place on the vehicle rearward side of the crossmember. For this reason, the required amount of the panel member can be reduced, a degradation in space efficiency in the energy storage apparatus can be inhibited, and, for example, when loads in the vehicle up and down direction are input to the energy storage apparatus, the loads can be inhibited from being input into the energy storage cell.

As described above, according to the vehicle mounting structure for an energy storage apparatus pertaining to this disclosure, a degradation in space efficiency in the energy storage apparatus can be inhibited and, for example, when loads in the vehicle up and down direction are input to the energy storage apparatus, the loads can be inhibited from being input into the energy storage cell.

### BRIEF DESCRIPTION OF THE DRAWINGS

An exemplary embodiment of the present disclosure will be described in detail based on the following figures, wherein:
FIG. 1 is an exploded perspective view showing an overview of a vehicle mounting structure for an energy storage apparatus pertaining to the embodiment;
FIG. 2 is an exploded perspective view showing an overview of the energy storage apparatus shown in FIG. 1;
FIG. 3 is a perspective view showing an overview of an energy storage module shown in FIG. 2;
FIG. 4 is a cross-sectional view showing, as viewed from a front and rear direction, the energy storage apparatus shown in FIG. 1;
FIG. 5 is a cross-sectional view showing, as viewed from the front and rear direction, the energy storage apparatus shown in FIG. 4 with the addition of dashed lines to indicate an electrode body housed inside an energy storage cell;
FIG. 6 is an enlarged cross-sectional view showing, as viewed from the front and rear direction, a corner portion positioned on a vehicle width direction right side and vehicle up and down direction upper side of the energy storage cell shown in FIG. 4; and
FIG. 7 is a cross-sectional view showing, as viewed from the vehicle width direction, the vehicle mounting structure for the energy storage apparatus shown in FIG. 1.

### DETAILED DESCRIPTION

A vehicle mounting structure for an energy storage apparatus pertaining to an embodiment will now be described with reference to the drawings. It will be noted that arrow UP, arrow FR, and arrow RH shown as appropriate in the drawings indicate an upward direction in the vehicle up and down direction of a vehicle in which an energy storage apparatus 10 is mounted, a forward direction in the vehicle front and rear direction, and a rightward direction in the vehicle left and right direction (vehicle width direction), respectively. Furthermore, the directions of upper/lower, front/rear, and left/right may be used in the following description, and unless otherwise indicated, these will be understood to mean front/rear in the vehicle front and rear direction, upper/lower in the vehicle up and down direction, and left/right in the vehicle left and right direction (vehicle width direction). Moreover, when the positional relationships of above, below, forward, rearward, leftward, and rightward are used, these are to understood to mean above or below in the vehicle up and down direction, forward or rearward in the vehicle front and rear direction, and leftward or rightward in the vehicle left and right direction (vehicle width direction), respectively.

It will be noted that unless otherwise noted in the specification, components are not limited to being singular and may be present in a plural number. Furthermore, substantially identical components are assigned identical reference signs in the drawings, and redundant description in the specification will be omitted.

### [Overall Configuration]

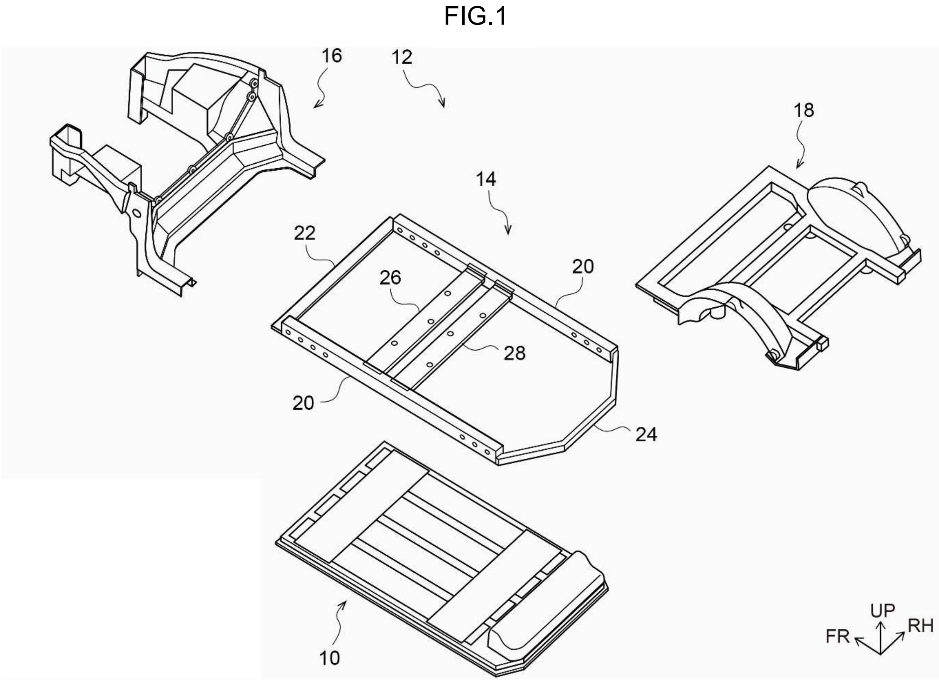

FIG. 1 is an exploded perspective view showing an overview of a vehicle mounting structure for an energy storage apparatus 10 pertaining to this embodiment. As shown in FIG. 1, the energy storage apparatus 10 is disposed below a vehicle frame 12 that configures a frame of a vehicle. Furthermore, the energy storage apparatus 10 is joined to the vehicle frame 12 using a known method such as fastening, welding, or adhesion.

The vehicle frame 12 is configured to include a center module 14, a front module 16 disposed forward of the center module 14, and a rear module 18 disposed rearward of the center module 14. It will be noted that the center module 14, the front module 16, and the rear module 18 may each be formed by joining a plurality of frame members, or a part of the frame may be integrally formed by a method such as casting.

The center module 14 is configured to include a pair of side frames 20 that are disposed on both end portions in the left and right direction and extend along the front and rear direction, a front frame 22 that is disposed with its lengthwise direction coinciding with the left and right direction and is connected to front end portions of the pair of side frames 20, a rear frame 24 that is disposed with its lengthwise direction coinciding with the left and right direction and is connected to rear end portions of the pair of side frames 20, and a plurality of seat crossmembers 26, 28 that extend in the left and right direction and are disposed next to each other in the front and rear direction. A front seat crossmember 26 positioned on the front side and a rear seat crossmember 28 positioned on the rear side out of the plural seat crossmembers 26, 28 each have both ends in the left and right direction joined to the pair of side frames 20. Seats are secured to the seat crossmembers 26, 28.

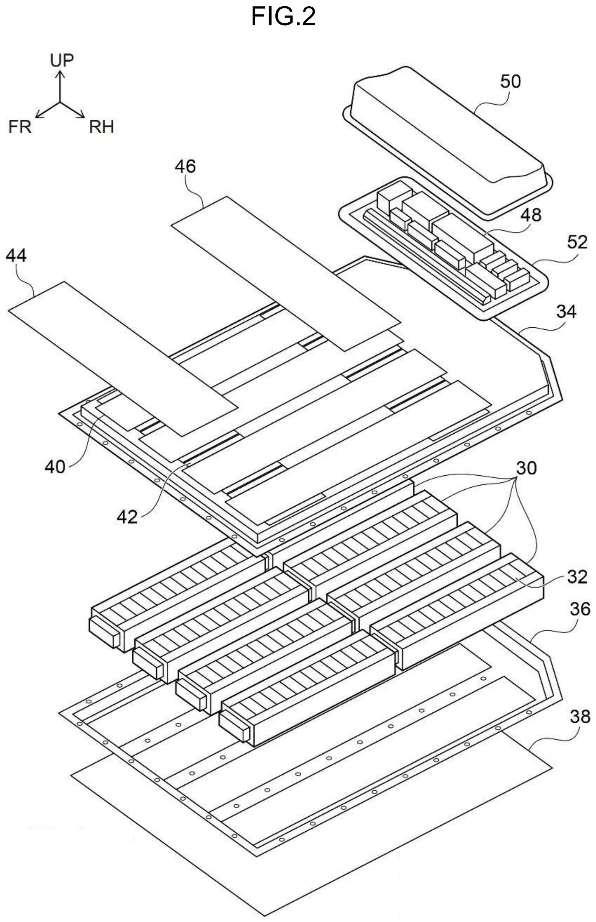

FIG. 2 is an exploded perspective view showing an overview of the energy storage apparatus 10 shown in FIG. 1. As shown in FIG. 2, the energy storage apparatus 10 includes a plurality of energy storage modules 30. The plural energy storage modules 30 are disposed next to each other in the left and right direction. Details will be described below, but the energy storage modules 30 are each configured to include a plurality of energy storage cells 32 disposed next to each other in the front and rear direction. It will be noted that the plural energy storage modules 30 may also be disposed next to each other in the front and rear direction. Furthermore, the energy storage modules 30 may each be configured to include a plurality of energy storage cells 32 disposed next to each other in the left and right direction.

The energy storage modules 30 are housed in a case 37 configured to include an upper cover 34 and a lower cover 36. The upper cover 34 is disposed above the energy storage modules 30, and the lower cover 36 is disposed below the energy storage modules 30. The upper cover 34 and the lower cover 36 are joined to each other using a known method such as fastening, welding, or adhesion.

Below the lower cover 36, a protective panel is disposed to protect the energy storage apparatus 10 from loads input from below. The protective panel 38 is joined to the lower cover 36 using a known method such as fastening, welding, or adhesion.

Above the upper cover 34, a plurality of coolers 40 extending in the front and rear direction are disposed next to each other in the left and right direction. The plural coolers 40 are interconnected at their end portions in the front and rear direction by collective flow paths not shown in the drawings. The plural coolers 40 are secured to the upper cover 34 by a thermally conductive adhesive, for example.

Furthermore, although details will be described below, above the upper cover 34, a plurality of elastic members 42 extending in the front and rear direction between the plural coolers 40 are disposed next to each other in the left and right direction. Furthermore, a plurality of elastic members 42 extending in the front and rear direction are also disposed next to each other in the front and rear direction. The elastic members 42 are secured to the upper cover 34 by, for example, adhesive means not shown in the drawings.

Above the elastic members 42, a plurality of rigid floor panel 44, 46 shaped like rectangular plates and disposed with their lengthwise direction coinciding with the left and right direction are disposed next to each other in the front and rear direction. For example, the rigid floor panel 44, 46 are made of metal as an example. It will be noted that the rigid floor panel 44, 46 are not limited to being made of metal and may also be rigid resin members.

Furthermore, the rigid floor panel 44, 46 are disposed sandwiching the elastic members 42 between themselves and the upper cover 34. The rigid floor panel 44, 46 form parts of the floor of the cabin. It will be noted that other panel members may be further disposed on the upper surfaces of the rigid floor panel 44, 46. The rigid floor panel 44, 46 extend in the left and right direction from one of the side frames 20 to the other of the side frames 20.

The rigid floor panel 44, 46 may be joined to the side frames 20 by fastening, for example. Furthermore, when the side frames 20 include flange portions extending in the left and right direction as viewed from the front and rear direction, the rigid floor panel 44, 46 may be joined to the upper surfaces of the flange portions by fastening, for example. For example, the upper cover 34 of the energy storage apparatus 10 may abut against the lower surfaces of the flange portions directly or via elastic members or the like. It will be noted that although in the above description an example was described where the rigid floor panel 44, 46 are joined to the side frames 20 by fastening, they may also be joined by a method other than fastening, such as welding or adhesion.

Furthermore, an energy storage device 48 is disposed above the upper cover 34 on the rear end portion side. The energy storage device 48 is electrically connected to the energy storage cells 32 or sensors or the like that detect the status of the energy storage cells 32, such as their temperature, voltage, and current. For example, the energy storage device 48 includes at least one selected from a battery management system (BMS), an electronic control unit (ECU), a DC-DC converter, and a system main relay (SMR).

The energy storage device 48 is covered from above by a device cover 50. The device cover 50 houses the energy storage device 48 by being joined to a device base 52 on which the energy storage device 48 is disposed. It will be noted that the device cover 50 may also house the energy storage device 48 by being joined to the upper cover 34.

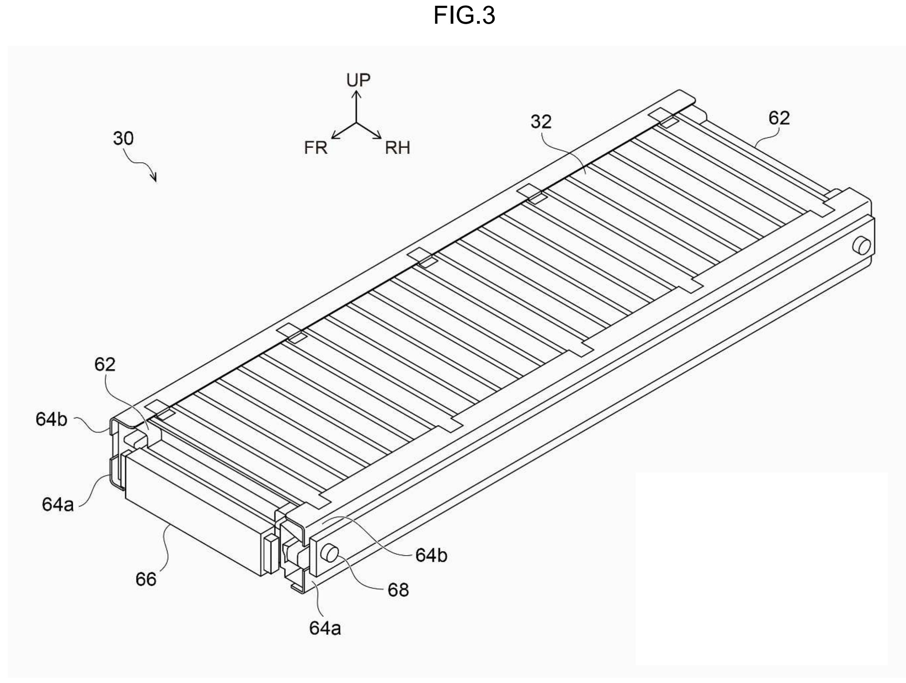

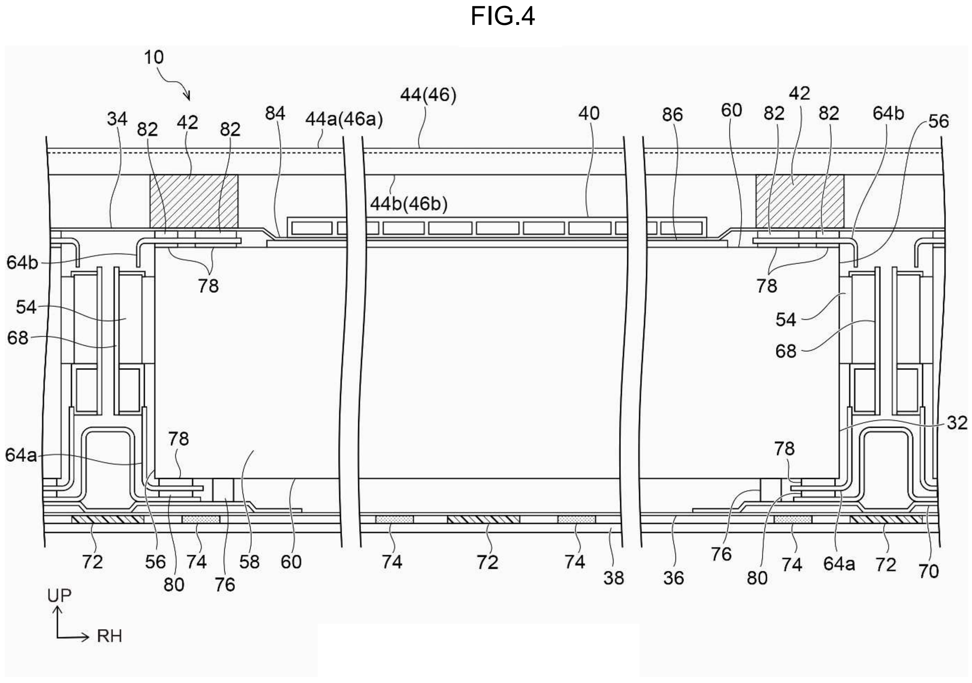

FIG. 3 is a perspective view showing an overview of an energy storage module 30 shown in FIG. 2. As shown in FIG. 3, the energy storage module 30 includes a plurality of the energy storage cells 32 disposed next to each other in the front and rear direction. Furthermore, FIG. 4 is a cross-sectional view showing, as viewed from the front and rear direction, the energy storage apparatus 10 shown in FIG. 1. As shown in FIG. 4, each of the plural energy storage cells 32 has, on both ends in the left and right direction, a pair of terminal walls 56 serving as vertical walls in which electrode terminals 54 are disposed. It will be noted that FIG. 4 shows only the side surfaces on the outer sides of the terminal walls 56 and that reference sign "56" indicates the side surfaces on the outer sides of the terminal walls serving as vertical walls. The pair of terminal walls 56 are interconnected by a pair of side walls 58, which extend in the left and right direction and are parallel to the up and down direction, and a pair of bottom walls 60, which extend in the left and right direction and are parallel to the front and rear direction. It will be noted that each of the plural energy cells 32 may have, on one end side in the left and right direction, a terminal wall 56 in which an electrode terminal 54 is disposed, and the electrode terminal 54 may be disposed on both ends or one end of each of the plural energy storage cells 32 in the up and down direction.

Using FIG. 3 again, the energy storage module 30 pertaining to this embodiment will now be described in detail. FIG. 3 shows an example where the energy storage cells 32 are adjacent to each other in the front and rear direction without other members intervening, but inter-cell members may be disposed between the energy storage cells 32 that are adjacent to each other in the front and rear direction. For example, the inter-cell members may be coolers, thermal insulation members, insulating members, or elastic members.

On both ends of the plurality of energy storage cells 32 disposed next to each other in the front and rear direction, a pair of end plates 62 are disposed. The pair of end plates 62 are interconnected by side plates 64a, 64b extending in the front and rear direction. The energy storage module 30 includes two each of the side plates 64a, 64b. It will be noted that in this specification both the side plates 64a, 64b will be called "the side plates 64" when generically referring to them. The side plates 64 are an example of connecting walls pertaining to this disclosure. The pair of end plates 62 interconnected by the side plates 64 inhibit displacement of the energy storage cells 32 in the front and rear direction. It will be noted that although in the above description an example was described where the pair of end plates 62 interconnected by the side plates 64 are disposed on both ends of the energy storage cells 32, instead of using the pair of end plates 62 interconnected by the side plates 64, displacement of the energy storage cells 32 in the front and rear direction may be inhibited by frame members provided inside the energy storage apparatus 10 (crossmembers extending in the front and rear direction or crossmembers extending in the left and right direction) or wall members that configure part of the case of the energy storage apparatus and extend in the up and down direction, and in this case the frame members in the energy storage apparatus or the wall members correspond to securing walls in this disclosure. That is, the end plates 62 are an example of securing walls pertaining to this disclosure.

Furthermore, monitoring devices 66 that monitor that status of the energy storage cells 32 are disposed on the end plates 62. The monitoring devices 66 are electrically connected to sensors or the like that detect the status of the energy storage cells 32, such as their temperature, voltage, and current.

The electrode terminals 54 of the energy storage cells 32 are provided with busbar modules 68 that interconnect the electrode terminals 54 of the energy storage cells 32 that are adjacent to each other. The busbar modules 68 electrically interconnect the electrode terminals 54 of the energy storage cells 32 that are adjacent to each other to form part of a circuit. It will be noted that the busbar modules 68 are not limited to electrically interconnecting the electrode terminals 54 of the energy storage cells 32 that are adjacent to each other and may electrically interconnect the electrode terminals 54 of the energy storage cells 32 that are not adjacent to each other in the energy storage modules 30.

In FIG. 4, a plurality of reinforcements 70 that extend in the front and rear direction and are disposed next to each other in the left and right direction are joined to the upper surface of the lower cover 36. Although details will be described below, the energy storage cells 32 are disposed between the plural reinforcements 70.

Between the lower cover 36 and the protective panel 38 are disposed a plurality of resin members 72 that extend in the front and rear direction and are disposed next to each other in the left and right direction. The plural resin members 72 are in contact with both the lower cover 36 and the protective panel 38. The plural resin members 72 transfer loads in the up and down direction between the lower cover 36 and the protective panel 38 to inhibit an excessive amount of deformation from occurring in the protective panel 38 when loads are input from outside.

Furthermore, between the lower cover 36 and the protective panel 38 are disposed a plurality of adhesives 74 that extend in the front and rear direction and are disposed next to each other in the left and right direction. The plural adhesives 74 transfer loads in the up and down direction between the lower cover 36 and the protective panel 38, adhere the lower cover 36 and the protective panel 38 to each other, and can improve the rigidity of the lower cover 36 and the protective panel 38.

The resin members 72 are disposed overlapping the reinforcements 70 as viewed from the up and down direction. In this case, when loads in the up and down direction are input, the resin members 72 can transfer the loads to the reinforcements 70 that have a relatively high rigidity.

The adhesives 74 are disposed overlapping the reinforcements 70 as viewed from the up and down direction. In this case, when loads in the up and down direction are input, the adhesives 74 can transfer the loads to the reinforcements 70 that have a relatively high rigidity, and the adhesives 74 can adhere the protective panel 38 below the reinforcements 70 that have a relatively high rigidity and improve the rigidity of the lower cover 36 and the protective panel 38.

The resin members 72 are disposed overlapping the center portions of the energy storage cells 32 in the left and right direction as viewed from the up and down direction. In this case, the resin members 72 inhibit an excessive amount of deformation from occurring in the protective panel 38 at the center portions of the energy storage cells 32 in the left and right direction.

The adhesives 74 are disposed overlapping the center portions of the energy storage cells 32 in the left and right direction as viewed from the up and down direction. In this case, the adhesives 74 inhibit an excessive amount of deformation from occurring in the protective panel 38 at the center portions of the energy storage cells 32 in the left and right direction and can improve the joint strength between the lower cover 36 and the protective panel 38.

The energy storage cells 32 are disposed overlapping the reinforcements 70 as viewed from the up and down direction. Furthermore, the energy storage cells 32 are joined by adhesives 76 to the reinforcements 70. It will be noted that although in the above description an example was described where the energy storage cells 32 are joined to the reinforcements 70 by adhesives, the energy storage cells 32 can be joined to the reinforcements 70 using a known method other than adhesion, such as fastening or welding.

Furthermore, the busbar modules 68, which are electrically connected to the electrode terminals 54 with which the energy storage cells 32 are equipped, are disposed overlapping the reinforcements 70 as viewed from the up and down direction. In this case, space efficiency in the left and right direction is improved, and the volumetric energy density of the energy storage module 10 is improved.

The energy storage cells 32 are each configured in the shape of a rectangle whose long sides extend in the left and right direction as viewed from the front and rear direction, and the L-shaped side plates 64a, 64b along the outer edge portions of the energy storage cells 32 are disposed two each in the four corner portions of the energy storage cells 32. The side plates 64 and the energy storage cells 32 are joined to each other via adhesives 78 in positions overlapping the elastic members 42 as viewed from the up and down direction.

Between the two side plates 64a disposed on the lower side out of the four side plates 64 and the reinforcements 70, elastic members 80 are disposed in positions overlapping the elastic members 42 as viewed from the up and down direction. It will be noted that although in the above description an example was where the elastic members 80 are disposed between the two side plates 64a disposed on the lower side and the reinforcements 70, adhesives may be disposed between the two side plates 64a disposed on the lower side and the reinforcements 70.

Between the two side plates 64b disposed on the upper side out of the four side plates 64 and the upper cover 34, elastic members 82 are disposed in positions overlapping the elastic members 42 as viewed from the up and down direction. It will be noted that although in the above description an example was described where the elastic members 82 are disposed between the two side plates 64b disposed on the upper side and the upper cover 34, adhesives may be disposed between the two side plates 64b disposed on the upper side and the upper cover 34.

Furthermore, in the upper cover 34, recessed portions 84 are formed in positions opposing the energy storage cells 32. The coolers 40 are disposed on the upper surfaces of the recessed portions 84. The energy storage cells 32 and the upper cover 34 are joined to each other by thermally conductive members 86 interposed between the energy storage cells 32 and the recessed portions 84. Furthermore, thermally conductive members not shown in the drawings are interposed between the recessed portions 84 and the coolers 40.

Above the upper cover 34 are disposed the rigid floor panel 44, 46 serving as panel members. For example, the rigid floor panel 44 has a panel-like structure where a lower wall 44b having a cross-section with a crenellated shape is joined to a plate-like upper wall 44a as viewed from the left and right direction. It will be noted that although in the above description the rigid floor panel 44 having a panel-like structure where the lower wall 44b having a cross-section with a crenellated shape is joined to the plate-like upper wall 44a as viewed from the left and right direction was described as an example, the rigid floor panel 44 may have a panel-like structure where a lower wall having a cross-section with a crenellated shaped is joined to a plate-like upper wall as viewed from the front and rear direction or a panel-like structure where an upper wall having a cross-section with a crenellated shape is joined to a plate-like lower wall. Furthermore, the rigid floor panel 44 may have a flat plate-like or curved plate-like structure instead of having a cross-section with a crenellated shape. That is, the rigid floor panel 44 is an example of a panel member in this disclosure. It will be noted that the rigid floor panel 46 has the same structure as the rigid floor panel 44, so detailed description of the rigid floor panel 46 will be omitted.

It will be noted that although some hatching is omitted, FIG. 4 shows cross-sections of, for example, the upper cover 34, the lower cover 36, the protective panel 38, the cooler 40, the rigid floor panel 44, 46, the side plates 64a, 64b, the busbar modules 68, the reinforcements 70, the adhesives 76, the adhesives 78, the elastic members 80, the elastic members 82, and the thermally conductive member 86.

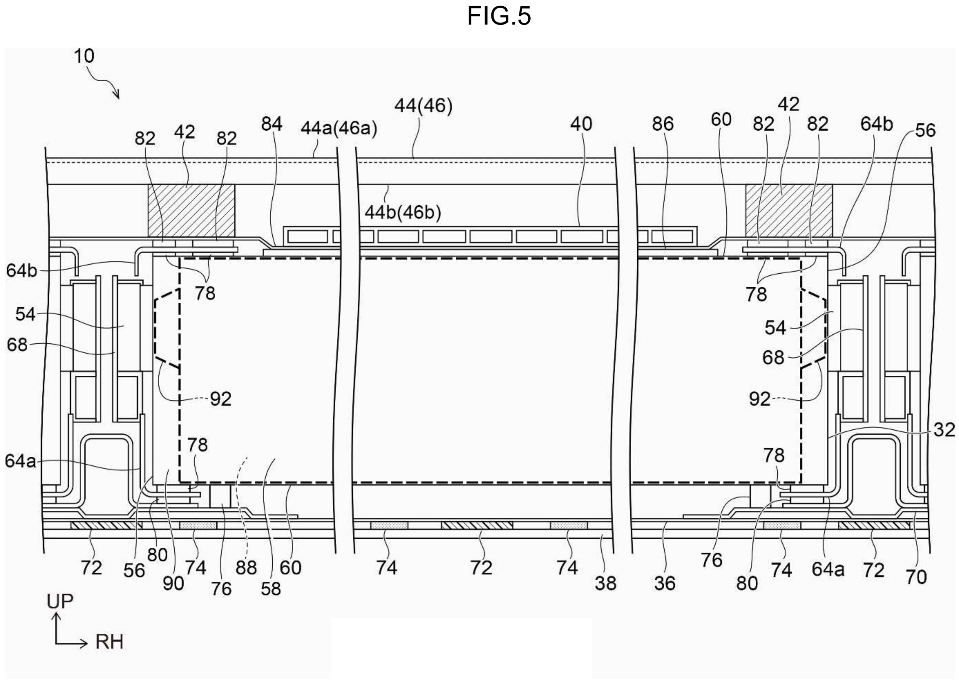

FIG. 5 is a cross-sectional view showing, as viewed from the front and rear direction, the energy storage apparatus 10 shown in FIG. 4 with the addition of dashed lines to indicate an electrode body 88 housed inside each of the energy storage cells 32. As shown in FIG. 5, an electrode body 88 is housed inside each of the energy storage cells 32. The electrode body 88 is a laminated electrode body in which a positive electrode layer, a separator layer, and a negative electrode layer are laminated or a coiled electrode body in which a positive electrode layer, a separator layer, and a negative electrode layer are laminated and coiled. More specifically, the positive electrode layer comprises a positive electrode current collector having a positive electrode active material coated on its surface, and the negative electrode layer comprises a negative electrode current collector having a negative electrode active material coated on its surface. When the energy storage cells 32 include a liquid electrolyte, the separator layer includes a separator layer comprising a sheet-like resin, for example. Furthermore, when the energy storage cells 32 include a solid electrolyte, the separator layer includes a separator layer comprising a solid electrolyte, for example. It will be noted that although in the above description specific examples of the electrode body 88 were described, the electrode body 88 is not limited to this, and this disclosure can be applied to energy storage cells 32 that house other known electrode bodies 88.

In FIG. 5, the energy storage apparatus 10 is configured to include spaced-apart regions 90 by which the terminal walls 56 and the electrode body 88 with which each of the energy storage cells 32 is equipped are spaced apart from each other in the left and right direction. For example, the width of the spaced-apart regions 90 in the left and right direction, that is, the distance between the terminal walls 56 and the electrode body 88, is a 10 mm to 30 mm space. It will be noted that the electrode body 88 and the terminal walls 56 are electrically interconnected by conductive members 92 to allow for the input and output of current, so the expression that the terminal walls 56 and the electrode body 88 are spaced apart from each other in the left and right direction means that the terminal walls 56 and the electrode body 88 need only be spaced apart from each other in the left and right direction at at least parts thereof in the up and down direction. The conductive members 92 are, for example, a positive electrode current collector terminal connected to the positive electrode current collector and a negative electrode current collector terminal connected to the negative electrode current collector. Furthermore, the width of the spaced-apart regions 90 in the left and right direction, that is, the distance between the terminal walls 56 and the electrode body 88, is the width of the parts where the terminal walls 56 and the electrode body 88 are spaced apart from each other in the left and right direction, that is, the distance between the terminal walls 56 and the electrode body 88.

It will be noted that although some hatching is omitted, FIG. 5 also shows cross-sections of, for example, the upper cover 34, the lower cover 36, the protective panel 38, the cooler 40, the rigid floor panel 44, 46, the side plates 64a, 64b, the busbar modules 68, the reinforcements 70, the adhesives 76, the adhesives 78, the elastic members 80, the elastic members 82, and the thermally conductive member 86.

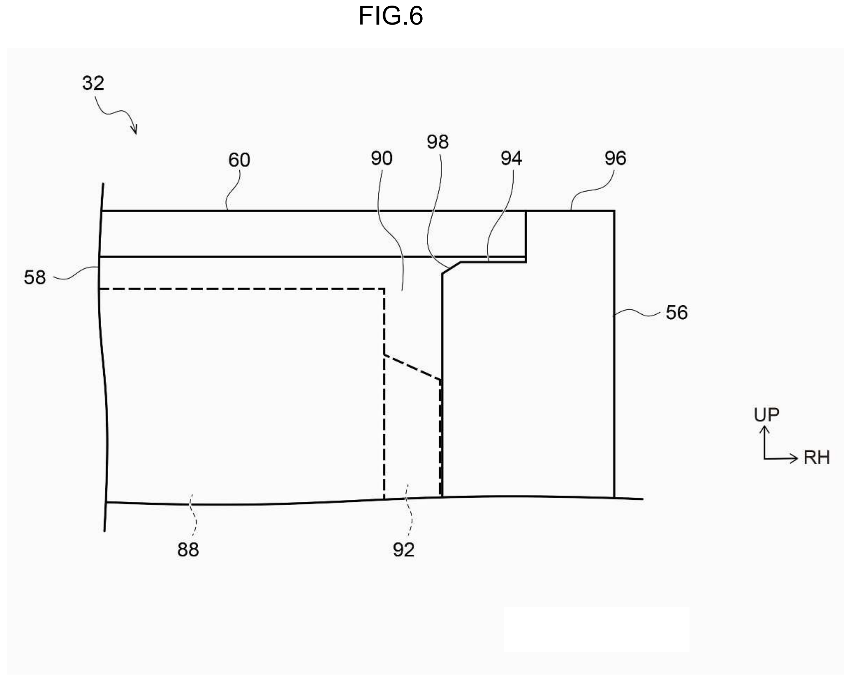

FIG. 6 is an enlarged cross-sectional view showing, as viewed from the front and rear direction, a corner portion positioned on the vehicle width direction right side and vehicle up and down direction upper side of the energy storage cell 32 shown in FIG. 4. As shown in FIG. 6, the terminal walls 56 are configured to have a thicker thickness than the side walls 58. It will be noted that the expression that the terminal walls 56 have a thicker thickness than the side walls 58 means for example that the maximum thickness of the terminal walls 56 is thicker than the maximum thickness of the side walls 58.

Furthermore, as shown in FIG. 6, the terminal walls 56 each include first parts 94 and second parts 96 that are disposed more outward of the energy storage cells 32 in the left and right direction than the first parts 94. The first parts 94 of the terminal walls 56 with which each of the energy storage cells 32 is equipped are spaced apart from the bottom walls 60 in the up and down direction. By contrast, the second parts 96 of the terminal walls 56 are joined by laser welding to the end portions of the bottom walls 60. It will be noted that although in the above description an example was described where the second parts 96 of the terminal walls 56 are joined to the end portions of the bottom walls 60 by laser welding, the terminal walls 56 can be joined at the second parts 96 to the bottom walls 60 using a known method other than laser welding, such as ultrasonic welding, swaging, or adhesion.

Furthermore, chamfered portions 98 are provided in the end portions of the first parts 94 that are disposed inward of the energy storage cells 32 in the left and right direction. By virtue of including the chamfered portions 98, the first parts 94 inhibit excessive loads from being applied to the bottom walls 60 when loads in the up and down direction are input to the bottom walls 60.

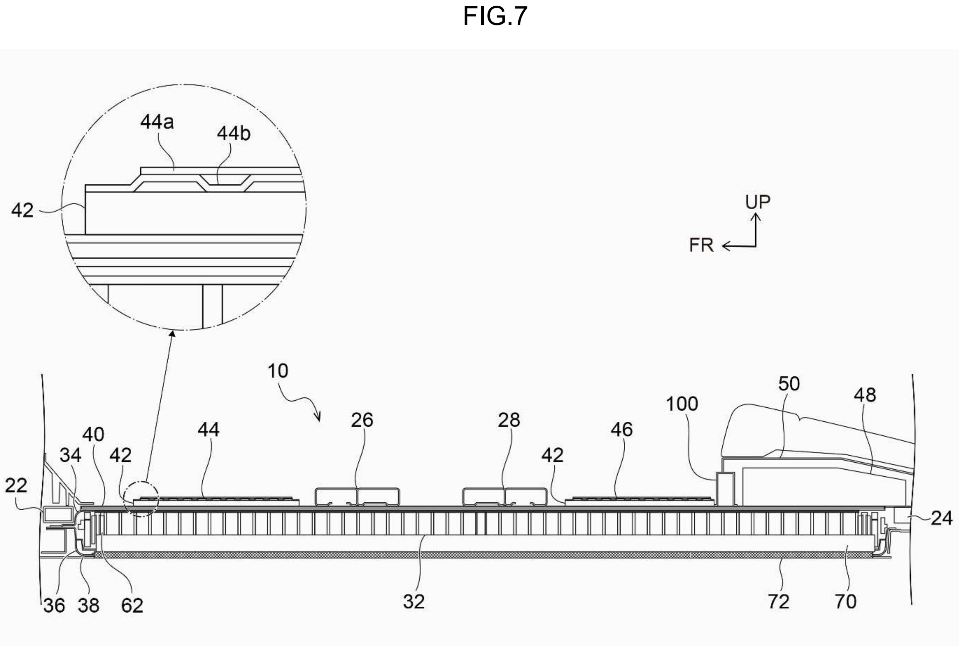

FIG. 7 is a cross-sectional view showing, as viewed from the vehicle width direction, the vehicle mounting structure for the energy storage apparatus 10 shown in FIG. 1. As shown in FIG. 7, the vehicle in which the energy storage apparatus 10 is mounted is configured to include the plural seat crossmembers 26, 28 that are disposed between a pair of frame members extending in the front and rear direction, extend in the left and right direction, and have seats secured to them. It will be noted that the seats are secured directly or via seat brackets to the seat crossmembers 26, 28.

Furthermore, the plural seat crossmembers 26, 28 have hollow structures as viewed from the left and right direction. It will be noted that although in the above example the plural seat crossmembers 26, 28 have cross-sectional shapes with hollow structures as viewed from the left and right direction, the plural seat crossmembers 26, 28 need not have cross-sectional shapes with hollow structures as viewed from the left and right direction and may have solid structures. Furthermore, the plural seat crossmembers 26, 28 may have hat-like structures or structures formed by roll forming.

Above the upper cover 34, the plural rigid floor panel 44, 46 are disposed next to each other in the front and rear direction. The plural rigid floor panel 44, 46 include a first rigid floor panel 44 and a second rigid floor panel 46. The seat crossmembers 26, 28 are disposed between the first rigid floor panel 44 and the second rigid floor panel 46 as viewed from the up and down direction.

More specifically, the first rigid floor panel 44 is disposed on the vehicle front side of the front seat crossmember 26 positioned on the vehicle front side out of the plural seat crossmembers 26, 28, and the second rigid floor panel 46 is disposed on the vehicle rear side of the rear seat crossmember 28 disposed on the vehicle rear side out of the plural seat crossmembers 26, 28.

Furthermore, above the upper cover 34, a crossmember 100 having a cross-sectional shape with a hollow structure as viewed from the left and right direction is disposed between the second rigid floor panel 46 and the energy storage device 48. The crossmember 100 is disposed extending in the left and right direction and is connected to the pair of side frames 20. It will be noted that although in the above example the crossmember 100 has a cross-sectional shape with a hollow structure as viewed from the left and right direction, the crossmember 100 need not have a cross-sectional shape with a hollow structure as viewed from the left and right direction and may have a solid structure. Furthermore, the crossmember 100 may have a hat-like structure or a structure formed by roll forming.

It will be noted that although some hatching is omitted, FIG. 7 shows cross-sections of, for example, the front frame 22, the rear frame 24, the front seat crossmember 26, the rear seat crossmember 28, the upper cover 34, the lower cover 36, the protective panel 38, the coolers 40, the first rigid floor panel 44, the second rigid floor panel 46, the energy storage device 48, the device cover 50, the device base 52, the reinforcements 70, and the crossmember 100.

### [Principal Configurations]

Returning again to FIG. 4, the elastic members 42 pertaining to this embodiment will now be described in detail. The elastic members 42, which have rectangular cross-sectional shapes, are disposed between the rigid floor panel 44, 46 and the upper cover 34. As viewed from the front and rear direction, a plurality of the elastic members 42 are disposed next to each other in the left and right direction. Furthermore, the elastic members 42 are disposed in contact with both the rigid floor panel 44, 46 and the upper cover 34.

The elastic members 42 are configured to include a urethane foam material. It will be noted that although in the above description an example was given where the elastic members 42 are configured to include a urethane foam material, the elastic members 42 may be configured to include at least one selected from ethylene propylene rubber, ethylene propylene diene rubber, a polyethylene foam material, and a polypropylene foam material. It will be noted that the elastic members 42 may themselves be adhesives and may, for example, be configured to include at least one selected from urethane adhesives, epoxy adhesives, silicone adhesives, and acrylic adhesives.

The elastic members 42 are disposed overlapping the end portions of the energy storage cells 32 in the left and right direction as viewed from the up and down direction. Particularly in this embodiment the elastic members 42 are disposed overlapping the terminal walls 56 of the energy storage cells 32 as viewed from the up and down direction. Furthermore, the elastic members 42 are disposed overlapping the side walls 58 of the energy storage cells 32 as viewed from the up and down direction. Moreover, the elastic members 42 are disposed overlapping the parts where the terminal walls 56 and the side walls 58 are interconnected in addition to the terminal walls 56 as viewed from the up and down direction.

Furthermore, the elastic members 42 are disposed overlapping the reinforcements 70 as viewed from the up and down direction. Furthermore, the elastic members 42 are disposed overlapping the elastic members 80 disposed between the two side plates 64a disposed on the lower side and the reinforcements 70 as viewed from the up and down direction. It will be noted that, as mentioned above, the elastic members 80 may also be adhesives.

Furthermore, the elastic members 42 are disposed overlapping the side plates 64 with which the energy storage modules 30 are equipped as viewed from the up and down direction. Moreover, the elastic members 42 are disposed overlapping the elastic members 82 disposed between the two side plates 64b disposed on the upper side and the upper cover 34 as viewed from the up and down direction. It will be noted that, as mentioned above, the elastic members 82 may also be adhesives.

Likewise, the elastic members 42, the adhesives 78, the elastic members 80, and the elastic members 82 are disposed overlapping the spaced-apart regions 90 as viewed from the up and down direction.

As shown in FIG. 5, the elastic members 42 are disposed overlapping the spaced-apart regions 90 as viewed from the up and down direction. Furthermore, the elastic members 42 are disposed overlapping the conductive members 92 as viewed from the up and down direction.

As shown in FIG. 6, the elastic members 42 are disposed overlapping the first parts 94 of the terminal walls 56 as viewed from the up and down direction. Furthermore, the elastic members 42 are disposed overlapping the chamfered parts 98 of the terminal walls 56 as viewed from the up and down direction.

As shown in FIG. 7, the elastic members 42 are disposed extending in the front and rear direction between the first rigid floor panel 44 and the upper cover 34 and between the second rigid floor panel 46 and the upper cover 34.

Furthermore, the end portion of the first rigid floor panel 44 on the vehicle rear side is spaced apart in the front and rear direction from the end portion of the front seat crossmember 26 on the vehicle front side. Moreover, the end portion of the second rigid floor panel 46 on the vehicle front side is spaced apart in the front and rear direction from the end portion of the rear seat crossmember 28 on the vehicle rear side.

### (Action and Effects)

Next, the action and effects of the vehicle mounting structure for the energy storage apparatus 10 pertaining to this embodiment will be described.

As shown in FIG. 2 and FIG. 4, the vehicle mounting structure for the energy storage apparatus 10 pertaining to this embodiment includes the rigid floor panels 44, 46 disposed above the upper cover 34 that houses at least some of the energy storage cells 32 that have the terminal walls (vertical walls) 56 disposed on their end portions in the left and left direction. Furthermore, the elastic members 42 are disposed between the rigid floor panel 44, 46 and the upper cover 34.

Here, as shown in FIG. 4, the vehicle mounting structure for the energy storage apparatus 10 includes the elastic members 42 that are disposed between the upper cover 34 and the rigid floor panel 44, 46 and are disposed overlapping the terminal walls 56 as viewed from the up and down direction. Because of this, when, for example, a downward impact load is input to the energy storage apparatus 10 from outside, the load is transferred downward using as load transfer paths the terminal walls (vertical walls) 56 that have a relatively high rigidity in the energy storage cells 32. For this reason, compared with a case where load transfer members are separately disposed inside the energy storage apparatus 10, a degradation in space efficiency in the energy storage apparatus 10 can be inhibited, and even when loads in the up and down direction are input to the energy storage apparatus 10, the loads can be inhibited from being input into the energy storage cells 32.

Next, other effects according to the vehicle mounting structure for the energy storage apparatus 10 pertaining to this embodiment will be described in detail.

First, in the vehicle mounting structure for the energy storage apparatus 10 pertaining to this embodiment, as shown in FIG. 4, the elastic members 42 are in contact with both the upper cover 34 and the rigid floor panel 44, 46. Because of this, when loads are input to the energy storage apparatus 10 from outside, the loads are transferred via the places where the elastic members 42 are disposed, that is, the terminal walls 56 that have a relatively high rigidity in the energy storage cells 32, irrespective of deformation of the upper cover 34 and the rigid floor panel 44, 46. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Second, in the vehicle mounting structure for the energy storage apparatus 10 pertaining to this embodiment, as shown in FIG. 4, the terminal walls 56 that are disposed on the end portions in the left and right direction and in which the electrode terminals 54 are disposed are thicker than the side walls 58 that are connected to the terminal walls 56 and extend in the up and down direction. Because of this, when loads are input to the energy storage apparatus 10 from outside, the terminal walls 56 that are connected to the side walls 58 in the energy storage cells 32 and whose rigidity is further improved by being configured thicker than the side walls 58 serve as load transfer paths. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Third, in the vehicle mounting structure for the energy storage apparatus 10 pertaining to this embodiment, as shown in FIG. 4, the elastic members 42 are disposed overlapping both the terminal walls 56 and the side walls 58 as viewed from the up and down direction. Because of this, both the terminal walls 56 that have a relatively high rigidity in the energy storage cells 32 and the side walls 58 that are connected to the terminal walls 56 and extend in the up and down direction serve as load transfer paths. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Fourth, in the vehicle mounting structure for the energy storage apparatus 10 pertaining to this embodiment, as shown in FIG. 5, the elastic members 42 are disposed overlapping the spaced-apart regions 90 by which the terminal walls 56 and the electrode bodies 88 are spaced apart from each other in the left and right direction as viewed from the up and down direction. Because of this, loads are transferred at the spaced-apart regions 90 by which the terminal walls 56 and the electrode bodies 88 are spaced apart from each other in the energy storage cells 32, that is, the parts where the electrode bodies 88 are relatively not disposed. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Fifth, in the vehicle mounting structure for the energy storage apparatus 10 pertaining to this embodiment, as shown in FIG. 4, the elastic members 42 are disposed overlapping the reinforcements 70 as viewed from the up and down direction. Because of this, when loads are input to the energy storage apparatus 10 from below, the loads are transferred using as load transfer paths both the terminal walls 56 that have a relatively high rigidity in the energy storage cells 32 and the reinforcements 70 that have a relatively high rigidity in the energy storage apparatus 10. For this reason, a degradation in space efficiency in the energy storage apparatus 10 can be inhibited, and when loads are input from below to the energy storage apparatus 10, the loads can be further inhibited from being input into the energy storage cells 32.

Sixth, in the vehicle mounting structure for the energy storage apparatus 10 pertaining to this embodiment, as shown in FIG. 4, the plurality of elastic members 42 are disposed overlapping each of the pair of terminal walls 56 disposed on both end portions of each of the energy storage cells 32 in the left and right direction as viewed from the up and down direction. Because of this, the rigidity of the energy storage cells 32 themselves is improved as a result being provided with a plurality of the terminal walls 56 that have a relatively high rigidity in the energy storage cells 32, and when loads are input to the energy storage apparatus 10 from outside, the loads are transferred in the up and down direction at multiple places that have a relatively high rigidity in the energy storage cells 42, that is, at each of the pair of terminal walls 56. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Seventh, in the vehicle mounting structure for the energy storage apparatus 10 pertaining to this embodiment, as shown in FIG. 4, the coolers 40 are disposed between the plurality of elastic members 42 and are disposed overlapping the energy storage cells 32 as viewed from the up and down direction. Because of this, when loads are input to the energy storage apparatus 10 from outside, the loads are transferred to the energy storage cells 32 not directly but via the coolers 40 in the spaces between the pairs of terminal walls 56 that have a relatively low rigidity in the energy storage cells 32. For this reason, a degradation in space efficiency in the energy storage apparatus 10 can be inhibited and, for example, when loads in the up and down direction are input to the energy storage apparatus 10, the loads can be further inhibited from being input into the energy storage cell 32.

Eighth, in the vehicle mounting structure for the energy storage apparatus 10 pertaining to this embodiment, as shown in FIG. 6, the terminal walls 56 each include the first parts 94 that are spaced apart from the bottom walls 60 in the up and down direction. Because of this, when loads are input to the energy storage apparatus 10 from outside, the bottom walls 60 are displaced in the up and down direction in the spaces between the terminal walls 56 and the bottom walls 60 to absorb the input loads, and the loads are transferred to the terminal walls 56 that have a relatively high rigidity in the energy storage cells 32. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Ninth, in the vehicle mounting structure for the energy storage apparatus 10 pertaining to this embodiment, as shown in FIG. 4, the elastic members 42 are disposed overlapping both the side plates 64 and the terminal walls 56 as viewed from the up and down direction. Because of this, when loads are input to the energy storage apparatus 10 from outside, the loads are input to the side plates 64 connected to the end plates 62 that secure the energy storage cells 32, and thereafter the loads are transferred to the terminal walls 56 that have a relatively high rigidity in the energy storage cells 32. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Tenth, in the vehicle mounting structure for the energy storage apparatus 10 pertaining to this embodiment, as shown in FIG. 4, the side plates 64 are joined to the energy storage cells 32 in positions overlapping the elastic members 42 as viewed from the up and down direction. Because of this, when loads are input to the energy storage apparatus 10 from outside, load transfer paths are more reliably formed in places where loads between the side plates 64 and the energy storage cell 32 are intended to be transferred. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Eleventh, in the vehicle mounting structure for the energy storage apparatus 10 pertaining to this embodiment, as shown in FIG. 4, the side plates 64 are joined to the upper cover 34 in positions overlapping the elastic members 42 as viewed from the up and down direction. Because of this, when loads are input to the energy storage apparatus 10 from outside, load transfer paths are more reliably formed in places where loads between the upper cover 34, the side plates 64, and the energy storage cells 32 are intended to be transferred. For this reason, a degradation in space efficiency in the energy storage apparatus 10 can be inhibited and, for example, when loads in the up and down direction are input to the energy storage apparatus 10, the loads can be further inhibited from being input into the energy storage cells 32.

Twelfth, as shown in FIG. 7, the vehicle mounting structure for the energy storage apparatus 10 pertaining to this embodiment includes the front seat crossmember 26 that is disposed rearwardly away from the first rigid floor panel 44 as viewed from the up and down direction. Because of this, when loads are input to the energy storage apparatus 10 from outside, the loads from outside are transferred to the front seat crossmember 26 at the place where the front seat crossmember 26 is disposed and at the terminal walls 56, which have a relatively high rigidity in the energy storage cells 32, the elastic members 42, and the first rigid floor panel 44 at a place on the forward side of the front seat crossmember 26. For this reason, the required amount of the rigid floor panel 44, 46 can be reduced, a degradation in space efficiency in the energy storage apparatus 10 can be inhibited, and, for example, when loads in the up and down direction are input to the energy storage apparatus 10, the loads can be inhibited from being input into the energy storage cells 32.

Thirteenth, as shown in FIG. 7, the vehicle mounting structure for the energy storage apparatus 10 pertaining to this embodiment includes the rear seat crossmember 28 that is disposed forwardly away from the second rigid floor panel 46 as viewed from the up and down direction. Because of this, when loads are input to the energy storage apparatus 10 from outside, the loads from outside are transferred to the rear seat crossmember 28 at the place where the rear seat crossmember 28 is disposed and at the terminal walls 56, which have a relatively high rigidity in the energy storage cells 32, the elastic members 42, and the rigid floor panel 44, 46 at a place on the rearward side of the rear seat crossmember 28. For this reason, the required amount of the rigid floor panel 44, 46 can be reduced, a degradation in space efficiency in the energy storage apparatus 10 can be inhibited, and, for example, when loads in the up and down direction are input to the energy storage apparatus 10, the loads can be inhibited from being input into the energy storage cells 32.

The energy storage apparatus 10 pertaining to the embodiment has been described above, but the energy storage apparatus 10 is not limited to this and can be implemented in a variety of ways without departing from the spirit of this disclosure.

It will be noted that although in the above embodiment the rigid floor panel 44, 46 were described as an example of the panel members, the panel members are not limited to this. The panel members need only be plate-like members that are rigid.

Furthermore, although in the above embodiment the elastic members 42 are in contact with both the upper cover 34 and the rigid floor panel 44, 46 as shown in FIG. 4, the elastic members 42 are not limited to this. The elastic members 42 may be in contact with just the upper surface of the upper cover 34 or in contact with just the lower surfaces of the rigid floor panel 44, 46.

Furthermore, although in the above embodiment the terminal walls 56 are configured thicker than the side walls 58 as shown in FIG. 6, the terminal walls 56 are not limited to this. The terminal walls 56 may also have the same thickness as the side walls 58 or configured thinner than the side walls 58.

Furthermore, although in the above embodiment the elastic members 42 are disposed overlapping the reinforcements 70 as viewed from the up and down direction as shown in FIG. 4, the elastic members 42 are not limited to this. The elastic members 42 may also be disposed spaced apart from the reinforcements 70 in the left and right direction as viewed from the up and down direction.

Furthermore, although in the above embodiment a plurality of the elastic members 42 are disposed overlapping each of the pair of terminal walls 56 as viewed from the up and down direction as shown in FIG. 4, the elastic members 42 are not limited to this. The plural elastic members 42 may also be disposed overlapping just one of the pair of terminal walls 56 as viewed from the up and down direction. Furthermore, just one elastic member 42 may be disposed overlapping just one of the pair of terminal walls 56 as viewed from the up and down direction. Moreover, although in the example shown in FIG. 4 the elastic members 42 are disposed overlapping the terminal walls 56 such that the entire thicknesses of the terminal walls 56 are hidden as viewed from the up and down direction, the elastic members 42 are not limited to this and, depending on the thicknesses of the vertical walls, may be disposed overlapping parts (e.g., half the thicknesses) of the vertical walls. Even with such an overlap, a load transfer effect is obtained in the overlapping range.

Furthermore, although in the above embodiment the coolers 40 are disposed between the upper cover 34 and the rigid floor panel 44, 46 as shown in FIG. 4, the coolers 40 are not limited to this. The coolers 40 may be disposed between the energy storage cells 32 and the upper cover 34. Furthermore, the coolers 40 may be disposed below the energy storage cells 32.

Furthermore, although in the above embodiment the terminal walls 56 each include the first parts 94 and the second parts 96 as shown in FIG. 6 and the terminal walls 56 are spaced apart at the first parts 94 from the bottom walls 60 in the up and down direction, the terminal walls 56 are not limited to this. The terminal walls 56 need not be spaced apart from the bottom walls 60.

Furthermore, although in the above embodiment the elastic members 42 are disposed overlapping the side plates 64 connected to the end plates 62 as viewed from the up and down direction as shown in FIG. 4, the elastic members 42 are not limited to this. The elastic members 42 need not be disposed overlapping the side plates 64. Furthermore, the energy storage apparatus 10 need not include the side plates 64.

Furthermore, although in the above embodiment the side plates 64 are joined to the energy storage cells 32 in positions overlapping the elastic members 42 as viewed from the up and down direction as shown in FIG. 4, the side plates 64 are not limited to this. The side plates 64 may be in contact with the energy storage cells 32 and elastic members for transferring loads in positions overlapping the elastic members 42 as viewed from the up and down direction.

Furthermore, although in the above embodiment the side plates 64 are joined to the upper cover 34 in positions overlapping the elastic members 42 as viewed from the up and down direction as shown in FIG. 4, the side plates 64 are not limited to this. The side plates 64 may be in contact with the upper cover 34 and elastic members for transferring loads in positions overlapping the elastic members 42 as viewed from the up and down direction.

Furthermore, although in the above embodiment the energy storage apparatus 10 includes the front seat crossmember 26 disposed rearwardly away from the first rigid floor panel 44 as viewed from the up and down direction as shown in FIG. 7, the energy storage apparatus 10 is not limited to this. The first rigid floor panel 44 and the front seat crossmember 26 may be disposed overlapping each other in the up and down direction as viewed from the up and down direction.

Furthermore, although in the above embodiment the energy storage apparatus 10 includes the rear seat crossmember 28 disposed forwardly away from the second rigid floor panel 46 as viewed from the up and down direction as shown in FIG. 7, the energy storage apparatus 10 is not limited to this. The second rigid floor panel 46 and the rear seat crossmember 28 may be disposed overlapping each other in the up and down direction as viewed from the up and down direction.

## Claims

1. A vehicle mounting structure for an energy storage apparatus comprising:
an energy storage cell (32) in which a vertical wall (56) extending in a vehicle up and down direction is disposed on an end portion thereof in a first direction orthogonal to the vehicle up and down direction;
an upper cover (34) disposed above the energy storage cell (32);
a panel member (44, 46) disposed above the upper cover (34); and
an elastic member (42) that is disposed between the upper cover (34) and the panel member (44, 46) and is disposed overlapping the vertical wall (56) as viewed from the vehicle up and down direction.

2. The vehicle mounting structure for an energy storage apparatus of claim 1, wherein the elastic member (42) is in contact with both the upper (34) cover and the panel member (44, 46).

3. The vehicle mounting structure for an energy storage apparatus of claim 2, wherein
the energy storage cell includes
a terminal wall (56) that is disposed on the end portion in the first direction and in which an electrode terminal is disposed and
a side wall (58) that is connected to the terminal wall (56) and is parallel to the vehicle up and down direction, and
the terminal wall (56) is thicker than the side wall (58).

4. The vehicle mounting structure for an energy storage apparatus of claim 3, wherein the elastic member (42) is disposed overlapping both the terminal wall (56) and the side wall (58) as viewed from the vehicle up and down direction.

5. The vehicle mounting structure for an energy storage apparatus of claim 4, wherein
the energy storage cell (32) houses an electrode body (88) and includes a spaced-apart region (90) by which the terminal wall (56) and the electrode body (88) are spaced apart from each other in the first direction inside the energy storage cell (32), and
the elastic member (42) is disposed overlapping the spaced-apart region as viewed from the vehicle up and down direction.

6. The vehicle mounting structure for an energy storage apparatus of claim 5, further comprising a lower cover (36) disposed below the energy storage cell (32) and a reinforcement (70) joined to the lower cover (36),
wherein the elastic member (42) is disposed overlapping the reinforcement (70) as viewed from the vehicle up and down direction.

7. The vehicle mounting structure for an energy storage apparatus of any one of claim 3 to claim 6, wherein
the energy storage cell (32) includes a pair of the terminal walls (56) that are disposed on each of both end portions in the first direction, and
a plurality of the elastic members (42) are disposed overlapping each of the pair of terminal walls (56) as viewed from the vehicle up and down direction.

8. The vehicle mounting structure for an energy storage apparatus of claim 7, further comprising a cooler (40) disposed between the upper cover (34) and the panel member (44, 46),
wherein the cooler (40) is disposed between the plurality of elastic members (42) and is disposed overlapping the energy storage cell (32) as viewed from the vehicle up and down direction.

9. The vehicle mounting structure for an energy storage apparatus of any one of claim 3 to claim 6, wherein
the energy storage cell (32) includes a bottom wall that is connected to the terminal wall (56) and is orthogonal to the vehicle up and down direction,
the terminal wall (56) includes a first part (94) and a second part (96) that is disposed more outward of the energy storage cell (32) in the first direction than the first part (94), and
the first part (94) is spaced apart from the bottom wall (60) in the vehicle up and down direction.

10. The vehicle mounting structure for an energy storage apparatus of any one of claim 3 to claim 6, further comprising
a pair of securing walls (62) that are disposed on both ends in a second direction, which is orthogonal to both the vehicle up and down direction and the first direction, of a plurality of the energy storage cells disposed next to each other in the second direction and secure the energy storage cells and
a connecting wall (64) that is disposed extending in the second direction and is connected to the pair of securing walls (62),
wherein the elastic member (42) is disposed overlapping both the connecting wall (64) and the terminal wall (56) as viewed from the vehicle up and down direction.

11. The vehicle mounting structure for an energy storage apparatus of claim 10, wherein the connecting wall (64) is joined to the energy storage cells (32) in a position overlapping the elastic member (42) as viewed from the vehicle up and down direction.

12. The vehicle mounting structure for an energy storage apparatus of claim 11, wherein the connecting wall (64) is joined to the upper cover (34) in a position overlapping the elastic member (42) as viewed from the vehicle up and down direction.

13. The vehicle mounting structure for an energy storage apparatus of any one of claim 1 to claim 6, wherein the vehicle mounting structure includes
a pair of frame members (12) extending in a vehicle front and rear direction and
a crossmember (26, 28) that extends in a vehicle width direction, is connected to the pair of frame members (12), and is disposed away from the panel member in a vehicle rearward direction as viewed from the vehicle up and down direction.

14. The vehicle mounting structure for an energy storage apparatus of any one of claim 1 to claim 6, wherein the vehicle mounting structure includes
a pair of frame members (12) extending in a vehicle front and rear direction and
a crossmember (26, 28) that extends in a vehicle width direction, is connected to the pair of frame members, and is disposed away from the panel member in a vehicle forward direction as viewed from the vehicle up and down direction.
